# EUROPÄISCHE PATENTSCHRIFT

(11) **EP 2 401 100 B1**
(45) Veröffentlichungstag und Bekanntmachung des Hinweises auf die Patenterteilung: **22.06.2016**
(21) Anmeldenummer: 10722534.4
(22) Anmeldetag: 24.02.2010
(51) Int. Cl.: B22F 7/00, B22F 3/11, B23P 17/04, F16J 15/06

(54) **PULVERMETALLURGISCHER KÖRPER UND VERFAHREN ZU SEINER HERSTELLUNG**
POWDER-METALLURGICAL BODY AND METHOD FOR THE PRODUCTION THEREOF
CORPS EN MÉTAL FRITTÉ ET PROCÉDÉ DE FABRICATION

(30) Priorität: 26.02.2009 DE 102009010371
(43) Veröffentlichungstag der Anmeldung: 04.01.2012
(73) Patentinhaber: PMG Füssen GmbH, 87629 Füssen (DE)
(72) Erfinder: MINEIF, Rudolf, 87629 Füssen (DE)
(86) Internationale Anmeldenummer: PCT/DE2010/000198
(87) Internationale Veröffentlichungsnummer: WO 2010/097072

(56) Entgegenhaltungen:
- DE-A1- 10 301 175
- DE-U1-202008 001 976
- US-A- 4 483 820
- US-A1- 2006 159 376

## Beschreibung

Die Erfindung betrifft einen pulvermetallurgischen Körper sowie ein Verfahren zur Herstellung eines pulvermetallurgischen Körpers.

Aus DE 103 01175 A1 ist ein pulvermetallurgisch hergestellter Körper bekannt, welcher mindestens einen porösen Bereich und mindestens einen flächigen fluiddichten Bereich aufweist. Der fluiddichte Bereich soll dicht gegenüber bestimmten Flüssigkeiten sein und unter Umständen auch eine Gasdichtheit aufweisen. Ein solcher fluiddichter Bereich kann eine Barriere innerhalb des Körpers bilden. US 2006/159376 A1 offenbart ein Gelenklager mit einer Dichtungsvorrichtung. Die Dichtungsvorrichtung enthält einen eisenhaltigen metallischen Dichtungsring, der von einem elastischen O-Ring umgeben ist.

Der Erfindung liegt die Aufgabe zugrunde, die Dichtungsfunktion eines pulvermetallurgischen Körpers zu verbessern.

Diese Aufgabe wird durch die Merkmalskombination der unabhängigen Ansprüche 1 und 13 gelöst.

Die Erfindung geht von dem Gedanken aus, an einem pulvermetallurgischen Körper - vorzugsweise aus Sintereisen oder Sinterstahl - ein separates Dichtungselement (z. B. eine Elastomerdichtung) anzulegen und dessen Dichtungsfunktion mit einem nachverdichteten Körperbereich zu kombinieren. Das Dichtungselement hat die Funktion, eine Wand des Körpers gegen unerwünschtes Hindurchdringen von Gasen und/oder Flüssigkeiten abzudichten. Diese Dichtungsfunktion wird dadurch verbessert, dass das Dichtungselement an einer Anlagebasis des Körpers anliegt und der pulvermetallurgische Körper im Bereich der Anlagebasis einen nachverdichteten Tiefenbereich aufweist. Der Tiefenbereich hat somit eine geringere mittlere Porosität (folglich höhere Materialdichte) als der gesamte Körper.

Die Porosität wird vorzugsweise mittels der Auftriebsmethode nach Archimedes oder mittels quantitativer Bildanalyse ermittelt. Bei Ermittlung der Porositäts-Werte mittels quantitativer Bildanalyse erfolgt vorzugsweise ein messtechnischer Abgleich mittels der vorgenannten Auftriebsmethode.

Erfindungsgemäß sind die Vorteile der Porosität eines Körpers (geringe Eigenmasse, geringer Materialverbrauch, kostengünstige Herstellung) kombinierbar mit einer höheren Materialdichte (geringere Porosität) des Körpers lediglich an den erforderlichen Bereichen. Diese Bereiche befinden sich erfindungsgemäß zumindest dort, wo auch ein oder mehrere Dichtungselemente anzuordnen sind. Die Anlagebasis bildet vorzugsweise eine mechanische Kontaktfläche für das Dichtungselement.

Im Tiefenbereich ist als lokal geringere Porosität insbesondere eine geschlossene Porosität vorgesehen. Hierdurch wird die Abdichtung bei pulvermetallurgischen Körpern im Bereich eines herkömmlichen Dichtungselementes wirksam unterstützt.

In einer bevorzugten Ausführungsform weist der lokal dichtere Bereich (d.h. der Tiefenbereich mit einer lokal geringeren Porosität) eine Materialtiefe von mindestens 0,01 mm oder mindestens 0,05 mm auf. Die Materialtiefe wird üblicherweise ausgehend von der Anlagebasis ermittelt. In bevorzugten Ausführungsformen beträgt die Materialtiefe bis zu 0,5 mm, bis zu 1,0 mm, bis zu 1,5 mm, bis zu 2,0 mm oder bis zu 2,5 mm. Bei einer Materialtiefe unterhalb 0,01 mm oder 0,05 mm (abhängig von der Anwendung) ist gegebenenfalls nicht gewährleistet, dass der pulvermetallurgische Körper im Tiefenbereich die gewünschte Dichtheit zur Unterstützung des Dichtungselements aufweist. Oberhalb einer Materialtiefe von 2,5 mm kann der verfahrenstechnische Aufwand zur Erzielung der gewünschten lokal höheren Dichte bzw. lokal niedrigeren Porosität verhältnismäßig hoch sein, ohne dass hierbei ein hinsichtlich der Dichtungswirkung erforderlicher zusätzlicher Nutzen entsteht.

Vorzugsweise ist der Tiefenbereich in einem Querschliff als eine Querschnittsfläche repräsentiert, die als Produkt aus der Materialtiefe und einer insbesondere parallel zur Anlagebasis verlaufenden Materialbreite gebildet ist. Vorzugsweise ist die Materialbreite derart dimensioniert, dass sie kleiner oder gleich der Breite der Anlagebasis ist. Die betrachtete Querschnittsfläche beträgt insbesondere mindestens 0,3 mm². Diese Querschnittsfläche repräsentiert z.B. ein zu betrachtendes Feld mit einer Materialtiefe von 0,5 mm und einer Materialbreite von 0,6 mm.

Zur Unterstützung der Dichtungswirkung im Bereich der Anlagebasis sind für das Verhältnis der Materialtiefe und der Porosität folgende Ausführungsformen bevorzugt:
Bei einer Materialtiefe bis zu 0,05 mm beträgt die mittlere Porosität im Tiefenbereich höchstens 4 Vol.-% (entsprechend mindestens 96 % der theoretischen Dichte), vorzugsweise höchstens 2,5 Vol.-% (entsprechend mindestens 97,5 % der theoretischen Dichte). Bei einer Materialtiefe bis zu 0,5 mm beträgt die mittlere Porosität im Tiefenbereich höchstens 5 Vol.-%, vorzugsweise höchstens 2,5 Vol.-%. Bei einer Materialtiefe bis zu 1,0 mm beträgt die mittlere Porosität im Tiefenbereich höchstens 6 Vol.-%, vorzugsweise höchstens 3 Vol.-%. Bei einer Materialtiefe bis zu 1,5 mm beträgt die mittlere Porosität im Tiefenbereich höchstens 7 Vol.-%, vorzugsweise höchstens 3,5 Vol.-%.
Die angegebenen Porositäts-Werte werden vorzugsweise mit der Methode der quantitativen Bildanalyse (Metallographie) ermittelt.

Vorzugsweise beträgt die mittlere Porosität im Tiefenbereich höchstens 5 Vol.-%. Oberhalb 5 Vol.-% mittlerer Porosität im Tiefenbereich ist die gewünschte Dichtheit gegenüber Gasen und Flüssigkeiten gegebenenfalls nicht gewährleistet. Außerhalb des Tiefenbereichs ist eine Fluid-/Gasdichtheit des Körpers nicht erforderlich, so dass dort die mittlere Porosität (z.B. oberhalb 10 Vol.-%) derjenigen eines herkömmlichen pulvermetallurgischen Bauteiles entsprechen kann.

Vorzugsweise ist die Anlagebasis Bestandteil einer Dichtungsnut zur Aufnahme des Dichtungselementes, wodurch das Dichtungselement am pulvermetallurgischen Körper technisch einfach fixierbar ist. Die Anlagebasis ist insbesondere an einem Nutgrund der Dichtungsnut angeordnet. Insbesondere ist die Anlagebasis in einer Umfangsrichtung des pulvermetallurgischen Körpers in sich geschlossen ausgebildet. Auf diese Weise kann die Anlagebasis beispielsweise mit ringförmigen Dichtungselementen korrespondieren, wie sie im Zusammenhang mit einer wirksamen Abdichtung von Bauteilen oftmals verwendet werden.

Vorzugsweise weist der pulvermetallurgische Körper eine Körperachse (z.B. Symmetrieachse oder Rotationsachse) auf. Die Anlagebasis bzw. der Nutgrund der Dichtungsnut liegt insbesondere in einer Ebene ein, die quer zur Körperachse angeordnet ist. Der Körper ist vorzugsweise ringartig ausgebildet.

Vorzugsweise wird die lokal geringere Porosität bzw. lokal höhere Dichte in Kombination mit einer Dichtungsnut realisiert, die im Bereich eines Stirnendes des pulvermetallurgischen Körpers angeordnet ist. Im Bereich der Stirnenden oder auch an anderen Stellen sind die ein Dichtungselement umgebenden Wandsegmente des pulvermetallurgischen Körpers oftmals verhältnismäßig dünn dimensioniert. Diese Stellen können hinsichtlich der unerwünschten Undichtheit des Körpers am ehesten kritisch sein. Mittels der nachbearbeiteten Materialerhebung wird die Gefahr einer Undichtheit an diesen Stellen technisch einfach vermieden.

Bei bestimmten technischen Anwendungen ist die Abdichtung von pulvermetallurgischen Bauteilen gegen das Eindringen und/oder Ausdringen von Gasen und Flüssigkeiten (z.B. Öl) von großer Wichtigkeit, insbesondere im Maschinenbausektor und im Automobilsektor. Bei den pulvermetallurgischen Bauteilen handelt es sich z.B. um Rotoren und Statoren von Nockenwellenverstellersystemen. Beispielsweise ist eine Dichtheit gegen plantschendes Öl oder gegen Öldrücke in der Größenordnung von 1 bis 10 bar erforderlich. Für eine verbesserte Abdichtung können an diesen Bauteilen angeordnete herkömmliche Dichtungselemente mit einer lokal niedrigeren Porosität des pulvermetallurgischen Bauteiles im Bereich der Anlagebasis, d.h. im Tiefenbereich, kombiniert werden.

Mit Hilfe der bereitgestellten Materialerhebung ist es möglich, gezielt einzelne Bereiche des pulvermetallurgischen Körpers mittels geeigneter Werkzeuge und Verfahrensschritte mit einer lokal geringeren Porosität zu versehen. Die Bearbeitung der Materialerhebung bewirkt eine lokale Nachverdichtung in einem Tiefenbereich mit einer nach der Bearbeitung von der Anlagebasis ausgehenden Materialtiefe. Die lokale Nachverdichtung einzelner Bereiche hat auch den Vorteil, dass eine prozesstechnisch und kostenmäßig aufwändigere Nachverdichtung des gesamten pulvermetallurgischen Körpers, wie dies beispielsweise in DE 20 2008 001 976 U1 vorgeschlagen ist, vermieden wird.

Das Dichtungselement wird insbesondere nach der Bearbeitung der Materialerhebung an die Anlagebasis angelegt.

Vorzugsweise wird die Materialerhebung durch die Bearbeitung eingeebnet, d.h. die Dicke der Materialerhebung ist nach der Bearbeitung flacher oder vollständig aufgelöst derart, dass keine Materialerhebung mehr vorhanden ist. Diese Einebnung bewirkt vorteilhaft die gewünschte Verdichtung bzw. geringere Porosität im Tiefenbereich.

Für die lokale Bearbeitung wird ein geeignetes Werkzeug zur Erzielung der Nachverdichtung eingesetzt. Vorzugsweise erfolgt die Nachverdichtung in Form eines spezifischen Kalibriervorganges oder Pressvorganges. Hierzu werden insbesondere serienmäßig ohnehin vorhandene Werkzeuge verwendet, wodurch die lokale Nachverdichtung besonders kostengünstig erzielbar ist. Für den Kalibriervorgang eignet sich in einer bevorzugten Ausführungsform ein Kalibrierpressen. Alternativ erfolgt die Nachverdichtung mittels Kalibrierwalzen.

Dabei wird das Werkzeug für die Nachverdichtung vorzugsweise parallel zu der oben bereits genannten Körperachse transportiert und wirkt mit einer in Transportrichtung ausgerichteten Kraft oder Pressdruck auf eine insbesondere quer zur Transportrichtung angeordnete Fläche der Anlagebasis bzw. der Materialerhebung ein. Im Falle eines Pressvorganges entspricht dabei die Transportrichtung der Pressrichtung. Alternativ oder zusätzlich zur Transportbewegung des Werkzeugs kann auch der Körper in Richtung des Werkzeugs transportiert werden.

Vorzugsweise sind an dem pulvermetallurgischen Körper mehrere Anlagebasen vorhanden. Sind z.B. jeweils eine Anlagebasis an zwei gegenüberliegenden Seiten (z.B. Stirnenden) des Körpers angeordnet, können vorteilhaft entsprechende Teile eines geeigneten Nachverdichtungs-Werkzeugs von zwei Seiten des Körpers aufeinander zu transportiert werden und die Nachverdichtung im Bereich der beiden Anlagebasen gleichzeitig bewerkstelligen, so dass während der Nachverdichtung auf einer Seite des Körpers der jeweils gegenüberliegende Werkzeugteil prozesstechnisch einfach als Amboss wirken kann.

In einer bevorzugten Ausführung wird der Körper zusammen mit der Materialerhebung als pulvermetallurgischer Rohling bereitgestellt. Hierdurch werden zusätzliche aufwändige Verfahrensschritte zur Realisierung der Materialerhebung durch Materialzufuhr an den Rohling beispielsweise nach einem Sintern des Rohlings vermieden.

Die lokale Bearbeitung des Körpers im Bereich der Materialerhebung erfolgt vorzugsweise erst nach dem Sintern des gepressten Grünlings. Da nach dem Sintern ohnehin oftmals ein Kalibrieren des gesinterten Körpers vorgesehen ist, können vorzugsweise das Kalibrieren des Körpers und die Bearbeitung der Materialerhebung zeit- und kostensparend in einem einzigen Verfahrensschritt erfolgen.

Vorzugsweise ist nach der Bearbeitung der Materialerhebung noch mindestens ein weiterer Verfahrensschritt vorgesehen, bei dem die Poren an den Oberflächen des pulvermetallurgischen Körpers zumindest teilweise abgedichtet werden. Diese Abdichtung der Körper-Oberflächen unterstützt die gewünschte Fluid-/Gasdichtheit des Körpers und erfolgt vorzugsweise durch Auskleiden oder Verkleinern der Poren mit einer Magnetit-Schicht, die auch als Korrosionsschutz und zur Steigerung der Oberflächenhärte dienen kann. In einer weiteren Ausführungsform der Abdichtung werden die Poren mit einem Kunststoff imprägniert. In einer weiteren Ausführungsform der Abdichtung wird der Körper zunächst wie oben beschrieben dampfbehandelt und danach mit dem Kunststoff imprägniert.

Im Folgenden wird die Erfindung an Hand von Zeichnungen und einem Herstellungsbeispiel näher erläutert.

Es zeigen:
- Fig. 1: eine schematische, geschnittene Seitenansicht eines pulvermetallurgischen Körpers mit Anbauteilen und Dichtungselementen,
- Fig. 2: eine vergrößerte Darstellung des Details II in Fig. 1,
- Fig. 3: eine schematische, geschnittene Seitenansicht einer Dichtungsnut mit einer Materialerhebung,
- Fig. 4: eine lichtmikroskopische Aufnahme eines Festkörperschliffes aus einem pressfertigen Mischpulver (Eisen, Kupfer, Kohlenstoff, Presshilfsmittel) nach dem Sintern, ohne Materialerhebung und ohne Nachverdichtung im Bereich des Nutgrundes,
- Fig. 5: eine vergrößerte Aufnahme des Details V in Fig. 4,
- Fig. 6: eine lichtmikroskopische Aufnahme eines Festkörperschliffes aus der Pulvermischung gemäß Fig. 4 nach dem Sintern, jedoch mit Nachverdichtung im Bereich des Nutgrundes,
- Fig. 7: eine vergrößerte Aufnahme des Details VII in Fig. 6.

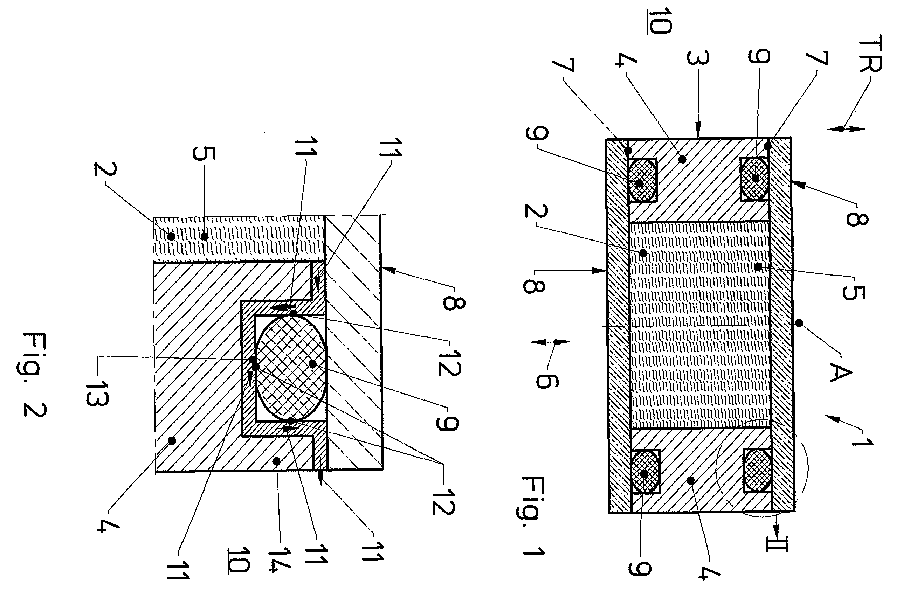

Anhand von Fig. 1 und Fig. 2 wird die Abdichtung einer Vorrichtung 1 gegen das Ausdringen von Flüssigkeit 2 (z.B. Öl) erläutert. Die Vorrichtung 1 enthält einen pulvermetallurgisch hergestellten Körper 3, der in Umfangsrichtung des Körpers 3 eine in sich geschlossene Seitenwand 4 aufweist. Die Seitenwand 4 begrenzt einen Innenraum 5. Im Innenraum 5 befindet sich die Flüssigkeit 2. An den in Axialrichtung 6 gegenüberliegenden Stirnseiten 7 des Körpers 3 ist jeweils eine Anbauplatte 8 angeordnet. Die Anbauplatten 8 sind mit geeigneten, hier nicht dargestellten Befestigungsmitteln an dem Körper 3 montiert (z.B. verschraubt) und verschließen den Innenraum 5 in Axialrichtung 6. Dichtungselemente in Form von zwei elastisch verformten, jeweils in sich geschlossenen Dichtungsringen 9 sollen verhindern, dass die Flüssigkeit 2 in den Übergangsbereichen zwischen den Anbauplatten 8 und dem Körper 3 vom Innenraum 5 in die äußere Umgebung 10 dringt.

Um ein Hindurchdringen von Flüssigkeit 2 durch die Seitenwand 4 hindurch zu verhindern, wird der Körper 3 abgedichtet. Hierzu wird er vorzugsweise mit einem Kunststoff imprägniert. Das Imprägnieren erfolgt durch Eintauchen des porösen Körpers 3 in das flüssige Imprägniermedium bei Unterdruck, wobei das Imprägniermedium in die Poren des Körpers 3 eindringt. Nach dem Entnehmen des Körpers 3 aus dem Imprägniermedium wird überschüssiges Imprägniermaterial abgespült und das Imprägniermedium in den Poren härtet zu einer festen Masse aus, wodurch die Fluiddichtheit erzielt wird. Verfahrensbedingt kann Imprägniermedium beim Abspülen unerwünschterweise ausgeschwemmt werden. Insbesondere in Randbereichen und/oder in Bereichen des Körpers 3 mit geringer Wandstärke besteht dabei die Gefahr, dass der Körper 3 nicht ausreichend abgedichtet ist bzw. undicht bleibt und deshalb ein undichter Kanal entsteht. Ein derartiger Kanal ist in Fig. 2 mittels der Pfeile 11 angedeutet. Er befindet sich im Bereich von Anlageflächen 12 des porösen Körpers 3, an denen das Dichtungselement 9 elastisch verformt anliegt.

Um einen derartigen undichten Kanal zu vermeiden, ist in einem Tiefenbereich 13 einer Anlagefläche 12 für das Dichtungselement 9 eine lokale Verringerung der Porosität vorgesehen.

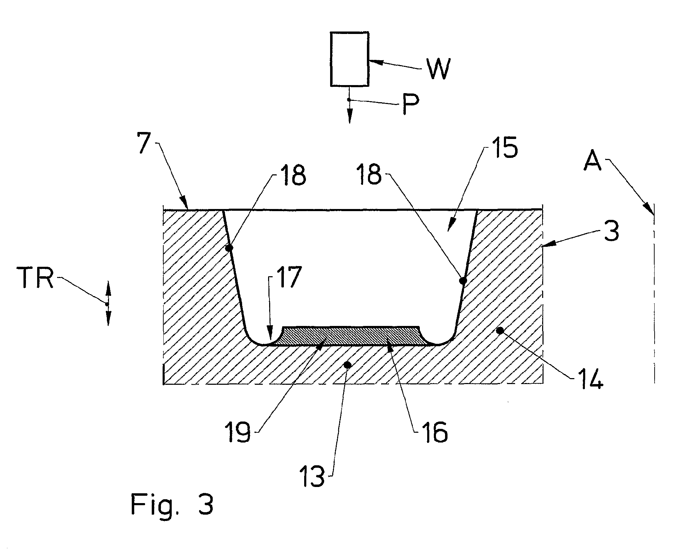

In Fig. 3 ist eine Dichtungsnut 15 des porösen Körpers 3 zur Aufnahme eines hier nicht dargestellten Dichtungselementes nochmals vergrößert dargestellt. Es ist eine Anlagebasis 16 vorgesehen (sie entspricht einer Anlagefläche 12 in Fig. 2), welche Bestandteil eines Nutgrundes 17 der Dichtungsnut 15 ist. Das Dichtungselement liegt im Montagezustand am Nutgrund 17 bzw. an der Anlagebasis 16 an. Gegebenenfalls liegt das Dichtungselement auch an den seitlichen Nutflanken 18 an. Die Nutflanken 18 können deshalb ebenfalls jeweils eine Anlagebasis bzw. Anlagefläche bilden.

Die Anlagebasis 16 wird mit einer Materialerhebung 19 bereitgestellt. Die Materialerhebung 19 wird auf noch zu erläuternde Weise mittels eines in Transportrichtung P parallel zu einer Körperachse A bewegten (und hier nur schematisch dargestellten) Werkzeugs W zur Nachverdichtung derart bearbeitet, dass nach der Bearbeitung an der Anlagebasis 16 der sich daran anschließende Tiefenbereich 13 eine lokal deutlich geringere Porosität aufweist als ein davon abgewandter Bereich (z.B. Bereich 14). Die mittlere Porosität des Tiefenbereiches 13 ist dann auch deutlich geringer als die mittlere Porosität des gesamten Körpers 3. Die in Tiefenrichtung TR verlaufende Materialtiefe T des Bereiches 13 mit lokal geringerer Porosität kann dabei je nach technischem Anwendungsfall und Anforderungsprofil des Körpers 3 variieren.

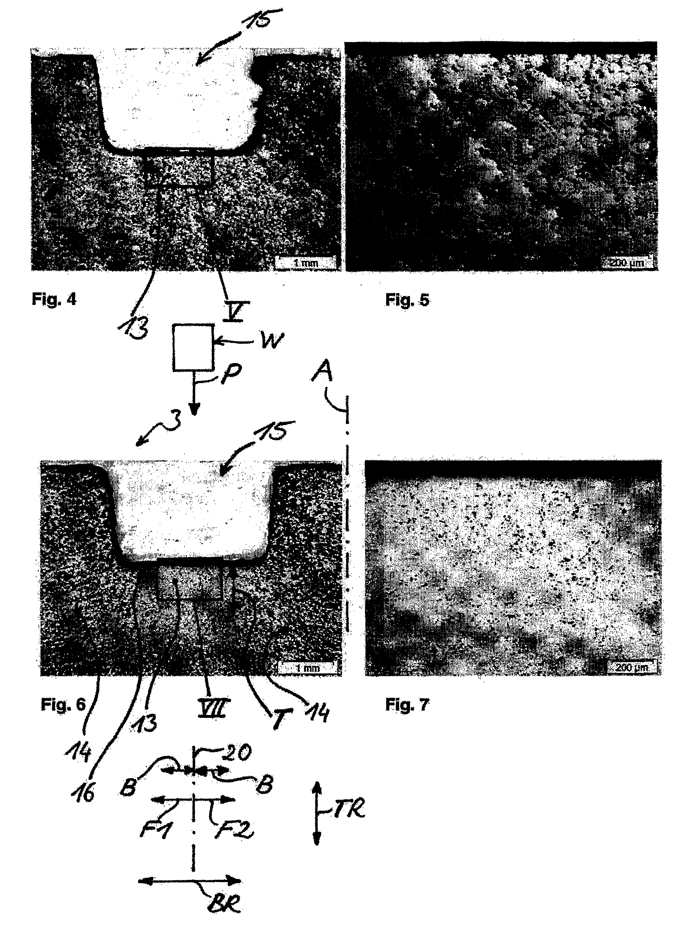

In Fig. 3 ist der Körper 3 nur teilweise dargestellt. Er ist in Umfangsrichtung in sich geschlossen ausgebildet, wobei die Umfangsebene rechtwinklig zur Körperachse A angeordnet ist. Die Ebene der bearbeiteten Anlagebasis 16 bzw. deren Oberfläche verläuft ebenfalls im wesentlichen quer bzw. rechtwinklig zur Körperachse A (siehe Fig. 6). Die Dichtungsnut 15 befindet sich im Bereich eines Stirnendes 7 des Körpers 3. Die Dichtungsnut 15 ist ebenfalls in sich geschlossen zur Aufnahme einer - vorzugsweise elastischen - Ringdichtung als Dichtungselement. Entsprechend ist auch die Anlagebasis in Umfangsrichtung des Körpers 3 in sich geschlossen, z.B. als Ringfläche, ausgebildet. An dem Körper 3 können auch mehrere Dichtungsnuten 15 - seien sie in Umfangsrichtung des Körpers 3 in sich geschlossen oder nicht - vorgesehen sein. Insbesondere weist der Körper 3 eine zweite Dichtungsnut 15 auf, die der dargestellten Dichtungsnut 15 in Tiefenrichtung TR gegenüberliegend angeordnet ist (siehe auch Fig. 1).

Nachfolgend wird die Herstellung eines porösen Körpers 3 mit einer lokal geringeren Porosität bzw. lokal höheren Dichte im Tiefenbereich 13 anhand eines Beispiels beschrieben.
Eine Metallpulver-Mischung aus Kupfer (1 bis 1,5 Gew.-%), Grafit (0,45 bis 0,65 Gew.-%), Mangansulfid (0,3 bis 0,4 Gew.-%), Mikrowachs (0,75 bis 0,85 Gew.-%), Rest Eisen wurde zu einem Grünling gepresst mit 380 MPa Pressdruck. Das Presswerkzeug war derart ausgebildet, dass auch die Materialerhebung 19 an der Dichtungsnut 15 geformt und gepresst wurde. Dieser bereitgestellte Grünling wurde danach in einem Banddurchlaufofen bei 1120°C unter Endogas 20 Minuten gesintert. Nach dem Sintern wurde die Materialerhebung 19 des gesinterten Körpers 3 mittels Kalibrierpressen mit 700 MPa Pressdruck bearbeitet und eingeebnet und hierdurch lokal nachverdichtet (siehe lichtmikroskopische Aufnahmen gemäß Fig. 6, Fig. 7). Das zum Kalibrierpressen verwendete Nachverdichtungs-Werkzeug (entspricht prinzipiell dem schematisch dargestellten Werkzeug W) wurde dabei in Transportrichtung P, d.h. parallel zur Körperachse A, in Richtung der Anlagebasis 16 bzw. der Materialerhebung 19 transportiert und ebnete die Materialerhebung 19 ein. Aufgrund dieser Nachverdichtung wies der Tiefenbereich 13 eine deutlich geringere Porosität auf als davon abgewandte, nicht nachverdichtete Bereiche 14 des porösen Körpers 3. Ebenso wies der Tiefenbereich 13 gemäß Fig. 6 und Fig. 7 eine deutlich geringere Porosität auf als die entsprechenden Bereiche eines baugleichen Körpers ohne diese lokale Nachbearbeitung bzw. Nachverdichtung im Bereich der Anlagebasis 16 (siehe Tiefenbereich 13 in Fig. 4 und Fig. 5).

Mittels der quantitativen Bildanalyse (Summe der Porenflächen im Verhältnis zur betrachteten Gesamtfläche) wurde der Porositäts-Verlauf entlang der Materialtiefe T ermittelt. Bei den Messungen wurden Poren mit einer Porengröße < 6 µm nicht berücksichtigt. Die Messungen wurden an polierten Oberflächen eines Querschliffes durchgeführt bei einer 200-fachen Vergrößerung (vollautomatisches Lichtmikroskop LEICA DM 4000-M mit Bildanalyseprogramm der Firma Clemex Vision). Der Querschnitt für die Schliffentnahme erfolgte mittels einer üblichen Schneidevorrichtung und SiC-Trennscheiben. Der Querschnitt wurde in mehreren Schritten mit unterschiedlicher Körnung geschliffen (80 bis 1200). Dieser Querschliff wurde noch einer Endpolitur mittels Polierscheibe unterzogen. Dabei wurde die Polierscheibe mit einer Alkohol-Suspension besprüht, die Diamantkörner (Korndurchmesser 1 bis 3 µm) enthielt.

Für die Messungen wurde der zu untersuchende Bereich des porösen Körpers 3 in ein Rasterfeld eingeteilt. Ausgehend von der Anlagebasis 16 wurden entlang der Materialtiefe T fünf aufeinanderfolgende Abschnitte mit jeweils 0,5 mm Materialtiefe definiert. Jeder Abschnitt umfasste zwei Teilfelder F1 und F2, die beiderseits einer definierten Nut-Mittellinie 20 angeordnet waren. Jedes Teilfeld F1, F2 hatte eine in Breitenrichtung BR ausgerichtete Feldbreite bzw. Materialbreite B von 0,6 mm. Die Breitenrichtung BR ist rechtwinklig zur Materialtiefe T angeordnet und verläuft in Fig. 6 parallel zur Nutbreite der Dichtungsnut 15. Das Rasterfeld umfasste folglich zwei Spalten mit jeweils fünf Teilfeldern, wobei jedes Teilfeld eine Querschnittsfläche von 0,6 mm mal 0,5 mm hatte.

Die bei einem ersten porösen Körper 3 mit lokaler Nachverdichtung ermittelten Porositätswerte sind der Tabelle 1 entnehmbar. Für Materialtiefen > 0,5 mm sind die Porositätswerte für Feld 1 jeweils als Mittelwert angegeben, der sich aus den Porositätswerten in den entsprechenden Teilfeldern F1 ergibt. Beispiel: Porosität Feld 1 (bei T = 0 - 0,5 mm) = 0,76 Vol.-%, identisch mit Porosität Teilfeld F1 (bei T = 0 - 0,5 mm).
Porosität Teilfeld F1 (bei T = 0,5 - 1,0 mm) = 1,56 Vol.-%. Daraus ergibt sich Porosität Feld 1 (bei T = 0 - 1,0 mm) = (0,76 + 1,56 Vol.-%)/2 = 1,16 Vol.-%. Die Ermittlung der Porositätswerte für das Feld 2 erfolgte analog ausgehend von den Porositätswerten in den Teilfeldern F2.

Da die Poren des Körpers 3 keine bevorzugte Ausrichtung hatten, entspricht die ermittelte flächenbezogene Porosität im wesentlichen auch der volumenbezogenen Porosität.

**Tabelle 1**

| | | | | | |
|---|---|---|---|---|---|
| Material-tiefe T in mm | 0-0,5 | 0-1,0 | 0-1,5 | 0-2,0 | 0-2,5 |
| Feld 1, Porosität in Vol.-% | 0,76 | 1,16 | 1,81 | 2,36 | 2,85 |
| Feld 2, Porosität in Vol.-% | 1,00 | 1,54 | 1,80 | 2,49 | 3,36 |
| Mittelwert der Porosität aus Feld 1 und Feld 2 in Vol.-% | 0,88 | 1,35 | 1,81 | 2,43 | 3,11 |

Die bei einem zweiten porösen Körper 3 mit lokaler Nachverdichtung ermittelten Porositätswerte sind der Tabelle 2 entnehmbar. Die Werte wurden analog zur Vorgehensweise bei Tabelle 1 ermittelt.

**Tabelle 2**

| | | | | | |
|---|---|---|---|---|---|
| Materialtiefe T in mm | 0 - 0,50 | 1,0 | 0 - 1,5 | 0 - 2,0 | 0 - 2,5 |
| Feld 1, Porosität in Vol.-% | 1,52 | 1,68 | 2,07 | 2,5 | 3,21 |
| Feld 2, Porosität in Vol.-% | 1,72 | 2,16 | 2,31 | 2,72 | 3,29 |
| Mittelwert der Porosität aus Feld 1 und Feld 2 in Vol.-% | 1,62 | 1,92 | 2,19 | 2,61 | 3,25 |

Anhand der Messungen ist erkennbar, dass die Porosität im Tiefenbereich 13 ausgehend von sehr niedrigen Werten an der Anlagebasis 16 mit zunehmender Materialtiefe T ansteigt.

Es sei darauf hingewiesen, dass in den Zeichnungen dargestellte Details nicht notwendigerweise maßstabsgetreu sind. So sind etwa die in Fig. 4 und Fig. 6 dargestellten Begrenzungen der Details V und VII sowie die dargestellten Pfeillängen zur Materialtiefe T, zur Materialbreite B und zu den Teilfeldern F1, F2 trotz der in Fig. 4 bis Fig. 7 erkennbaren Maßstabsangaben nicht notwendigerweise maßstabsgetreu.

## Patentansprüche

1. Pulvermetallurgischer Körper (3) mit einer Anlagebasis (12, 16), an der ein Dichtungselement (9) zur Abdichtung gegenüber Flüssigkeiten und/oder Gasen anliegt, wobei der Körper (3) im Bereich der Anlagebasis (12, 16) einen nachverdichteten Tiefenbereich (13) aufweist derart, dass der Tiefenbereich (13) eine geringere mittlere Porosität aufweist als der gesamte Körper (3).

2. Körper nach Anspruch 1, **dadurch gekennzeichnet, dass** der Körper (3) im Tiefenbereich (13) eine geschlossene Porosität, insbesondere ausschließlich eine geschlossene Porosität, aufweist.

3. Körper nach einem der vorhergehenden Ansprüche, **dadurch gekennzeichnet, dass** der Tiefenbereich (13) durch eine Querschnittsfläche repräsentiert ist, wobei die Querschnittsfläche als Produkt aus einer von der Anlagebasis (12, 16) ausgehenden Materialtiefe (T) und einer insbesondere parallel zur Anlagebasis (12, 16) verlaufenden Materialbreite (B) gebildet ist.

4. Körper nach einem der vorhergehenden Ansprüche, **dadurch gekennzeichnet, dass** der Tiefenbereich (13) eine Querschnittsfläche von mindestens 0,3 mm² aufweist.

5. Körper nach einem der vorhergehenden Ansprüche, **dadurch gekennzeichnet, dass** der Tiefenbereich (13) bei einer von der Anlagebasis (12, 16) ausgehenden Materialtiefe (T) bis zu 0,05 mm eine mittlere Porosität von höchstens 4 %, vorzugsweise höchstens 2 %, aufweist.

6. Körper nach einem der vorhergehenden Ansprüche, **dadurch gekennzeichnet, dass** der Tiefenbereich (13) bei einer von der Anlagebasis (12, 16) ausgehenden Materialtiefe (T) bis zu 0,5 mm eine mittlere Porosität von höchstens 5 %, vorzugsweise höchstens 2,5 %, aufweist.

7. Körper nach einem der vorhergehenden Ansprüche, **dadurch gekennzeichnet, dass** der Tiefenbereich (13) bei einer von der Anlagebasis (12, 16) ausgehenden Materialtiefe (T) bis zu 1,0 mm eine mittlere Porosität von höchstens 6 %, vorzugsweise höchstens 3 %, aufweist.

8. Körper nach einem der vorhergehenden Ansprüche, **dadurch gekennzeichnet, dass** der Tiefenbereich (13) bei einer von der Anlagebasis (12, 16) ausgehenden Materialtiefe (T) bis zu 1,5 mm eine mittlere Porosität von höchstens 7 %, vorzugsweise höchstens 3,5 %, aufweist.

9. Körper nach einem der vorhergehenden Ansprüche, **dadurch gekennzeichnet, dass** die Anlagebasis (12, 16) Bestandteil einer Dichtungsnut (15) zur Aufnahme des Dichtungselementes (9) ist.

10. Körper nach Anspruch 9, **dadurch gekennzeichnet, dass** die Anlagebasis (12, 16) Bestandteil eines Nutgrundes (17) der Dichtungsnut (15) ist.

11. Körper nach einem der vorhergehenden Ansprüche, **dadurch gekennzeichnet, dass** die Anlagebasis (12, 16) in einer Umfangsrichtung des Körpers (3) in sich geschlossen ausgebildet ist.

12. Körper nach einem der vorhergehenden Ansprüche, **dadurch gekennzeichnet, dass** die Dichtungsnut (15) im Bereich eines Stirnendes (7) des Körpers (3) angeordnet ist.

13. Verfahren zum Herstellen eines mittels eines Dichtungselements (9) abdichtbaren pulvermetallurgischen Körpers (3) mit folgenden Verfahrensschritten:
a) eine Anlagebasis (12, 16) des Körpers (3) für das anzulegende Dichtungselement (9) wird mit einer Materialerhebung (19) bereitgestellt,
b) die Materialerhebung (19) wird derart bearbeitet, dass der Körper (3) nach der Bearbeitung im Bereich der Anlagebasis (12, 16) einen nachverdichteten Tiefenbereich (13) aufweist derart, dass der Tiefenbereich (13) eine geringere mittlere Porosität aufweist als der gesamte Körper (3),
c) das Dichtungselement (9) wird an die Anlagebasis (12, 16) angelegt.

14. Verfahren nach Anspruch 13, **dadurch gekennzeichnet, dass** die Materialerhebung (19) durch die Bearbeitung eingeebnet wird.

15. Verfahren nach Anspruch 13 oder 14, **dadurch gekennzeichnet, dass** die Materialerhebung (19) durch Kalibrierpressen bearbeitet wird.

16. Verfahren nach einem der Ansprüche 13 bis 15, **dadurch gekennzeichnet, dass** der Körper (3) zusammen mit der Materialerhebung (19) als pulvermetallurgischer Rohling bereitgestellt wird.

17. Verfahren nach einem der Ansprüche 13 bis 16, **dadurch gekennzeichnet, dass** die Materialerhebung (19) nach dem Sintern des Rohlings bearbeitet wird.

18. Verfahren nach einem der Ansprüche 13 bis 17, **dadurch gekennzeichnet, dass** nach der Bearbeitung der Materialerhebung die Poren an den Oberflächen des Körpers (3) zumindest teilweise abgedichtet werden.

19. Verfahren nach Anspruch 18, **dadurch gekennzeichnet, dass** die Poren durch Imprägnieren mit einem Kunststoff abgedichtet werden.

## Claims

1. A powder-metallurgical body (3) having a seating base (12, 16) on which a sealing element (9) is seated so as to provide a seal with respect to liquids and/or gases, wherein the body (3) has a redensified depth region (13) in the region of the seating base (12, 16) in such a manner that the depth region (13) has a lower mean porosity than the body (3) as a whole.

2. The body as claimed in claim 1, **characterized in that** the body (3) has a closed porosity, in particular exclusively a closed porosity, in the depth region (13).

3. The body as claimed in either of the preceding claims, **characterized in that** the depth region (13) is represented by a cross-sectional area, wherein the cross-sectional area is formed as the product of a material depth (T) proceeding from the seating base (12, 16) and a material width (B) extending in particular parallel to the seating base (12, 16).

4. The body as claimed in one of the preceding claims, **characterized in that** the depth region (13) has a cross-sectional area of at least 0.3 mm².

5. The body as claimed in one of the preceding claims, **characterized in that**, given a material depth (T) proceeding from the seating base (12, 16) of up to 0.05 mm, the depth region (13) has a mean porosity of at most 4%, preferably at most 2%.

6. The body as claimed in one of the preceding claims, **characterized in that**, given a material depth (T) proceeding from the seating base (12, 16) of up to 0.5 mm, the depth region (13) has a mean porosity of at most 5%, preferably at most 2.5%.

7. The body as claimed in one of the preceding claims, **characterized in that**, given a material depth (T) proceeding from the seating base (12, 16) of up to 1.0 mm, the depth region (13) has a mean porosity of at most 6%, preferably at most 3%.

8. The body as claimed in one of the preceding claims, **characterized in that**, given a material depth (T) proceeding from the seating base (12, 16) of up to 1.5 mm, the depth region (13) has a mean porosity of at most 7%, preferably at most 3.5%.

9. The body as claimed in one of the preceding claims, **characterized in that** the seating base (12, 16) is a constituent part of a sealing groove (15) for receiving the sealing element (9).

10. The body as claimed in claim 9, **characterized in that** the seating base (12, 16) is a constituent part of a groove base (17) of the sealing groove (15).

11. The body as claimed in one of the preceding claims, **characterized in that** the seating base (12, 16) is formed continuously in a circumferential direction of the body (3).

12. The body as claimed in one of the preceding claims, **characterized in that** the sealing groove (15) is arranged in the region of a front end (7) of the body (3).

13. A method for producing a powder-metallurgical body (3) which can be sealed by means of a sealing element (9), comprising the following method steps:
a) a seating base (12, 16) of the body (3) for the sealing element (9) to be seated is provided with a material elevation (19),
b) the material elevation (19) is machined in such a manner that after the machining the body (3) has a redensified depth region (13) in the region of the seating base (12, 16) in such a manner that the depth region (13) has a lower mean porosity than the body (3) as a whole,
c) the sealing element (9) is seated on the seating base (12, 16).

14. The method as claimed in claim 13, **characterized in that** the material elevation (19) is flattened by the machining.

15. The method as claimed in claim 13 or 14, **characterized in that** the material elevation (19) is machined by calibration pressing.

16. The method as claimed in one of claims 13 to 15, **characterized in that** the body (3) together with the material elevation (19) is provided as a powder-metallurgical blank.

17. The method as claimed in one of claims 13 to 16, **characterized in that** the material elevation (19) is machined after the blank has been sintered.

18. The method as claimed in one of claims 13 to 17, **characterized in that** the pores on the surfaces of the body (3) are at least partially sealed after the material elevation has been machined.

19. The method as claimed in claim 18, **characterized in that** the pores are sealed by impregnation with a plastic.

## Revendications

1. Corps de métallurgie des poudres (3) comprenant une base d'unité (12, 16), sur laquelle un élément d'étanchéité (9) pour l'étanchéification contre les liquides et/ou les gaz est disposé, le corps (3) présentant dans la zone de la base d'unité (12, 16) une zone de profondeur densifiée (13) telle que la zone de profondeur (13) présente une porosité moyenne moins que l'ensemble du corps (3).

2. Corps selon la revendication 1, **caractérisé en ce que** le corps (3) présente dans la zone de profondeur (13) une porosité fermée, notamment exclusivement une porosité fermée.

3. Corps selon l'une quelconque des revendications précédentes, **caractérisé en ce que** la zone de profondeur (13) est représentée par une surface de section transversale, la surface de section transversale étant formée par le produit d'une profondeur de matériau (T) à partir de la base d'unité (12, 16) et d'une largeur de matériau (B) notamment parallèle à la base d'unité (12, 16).

4. Corps selon l'une quelconque des revendications précédentes, **caractérisé en ce que** la zone de profondeur (13) présente une surface de section transversale d'au moins 0,3 mm².

5. Corps selon l'une quelconque des revendications précédentes, **caractérisé en ce que** la zone de profondeur (13) présente une porosité moyenne d'au plus 4 %, de préférence d'au plus 2 %, à une profondeur de matériau (T) à partir de la base d'unité (12, 16) de jusqu'à 0,05 mm.

6. Corps selon l'une quelconque des revendications précédentes, **caractérisé en ce que** la zone de profondeur (13) présente une porosité moyenne d'au plus 5 %, de préférence d'au plus 2,5 %, à une profondeur de matériau (T) à partir de la base d'unité (12, 16) de jusqu'à 0,5 mm.

7. Corps selon l'une quelconque des revendications précédentes, **caractérisé en ce que** la zone de profondeur (13) présente une porosité moyenne d'au plus 6 %, de préférence d'au plus 3 %, à une profondeur de matériau (T) à partir de la base d'unité (12, 16) de jusqu'à 1,0 mm.

8. Corps selon l'une quelconque des revendications précédentes, **caractérisé en ce que** la zone de profondeur (13) présente une porosité moyenne d'au plus 7 %, de préférence d'au plus 3,5 %, à une profondeur de matériau (T) à partir de la base d'unité (12, 16) de jusqu'à 1,5 mm.

9. Corps selon l'une quelconque des revendications précédentes, **caractérisé en ce que** la base d'unité (12, 16) fait partie d'une rainure d'étanchéité (15) destinée à recevoir l'élément d'étanchéité (9).

10. Corps selon la revendication 9, **caractérisé en ce que** la base d'unité (12, 16) fait partie d'un fond de rainure (17) de la rainure d'étanchéité (15).

11. Corps selon l'une quelconque des revendications précédentes, **caractérisé en ce que** la base d'unité (12, 16) est configurée sous forme fermée dans une direction périphérique du corps (3).

12. Corps selon l'une quelconque des revendications précédentes, **caractérisé en ce que** la rainure d'étanchéité (15) est agencée dans la zone d'une extrémité frontale (7) du corps (3).

13. Procédé de fabrication d'un corps de métallurgie des poudres (3) étanchéifiable au moyen d'un élément d'étanchéité (9), comprenant les étapes de procédé suivantes :
a) une base d'unité (12, 16) du corps (3) pour l'élément d'étanchéité (9) à disposer est préparée avec une protubérance de matériau (19),
b) la protubérance de matériau (19) est usinée de sorte que le corps (3) présente après l'usinage dans la zone de la base d'unité (12, 16) une zone de profondeur densifiée (13) telle que la zone de profondeur (13) présente une porosité moyenne moins que l'ensemble du corps (3),
c) l'élément d'étanchéité (9) est disposé sur la base d'unité (12, 16).

14. Procédé selon la revendication 13, **caractérisé en ce que** la protubérance de matériau (19) est aplanie par l'usinage.

15. Procédé selon la revendication 13 ou 14, **caractérisé en ce que** la protubérance de matériau (19) est usiné par des presses à calibrage.

16. Procédé selon l'une quelconque des revendications 13 à 15, **caractérisé en ce que** le corps (3) est préparé sous la forme d'une ébauche de métallurgie des poudres, conjointement avec la protubérance de matériau (19).

17. Procédé selon l'une quelconque des revendications 13 à 16, **caractérisé en ce que** la protubérance de matériau (19) est usinée après le frittage de l'ébauche.

18. Procédé selon l'une quelconque des revendications 13 à 17, **caractérisé en ce que** les pores sur les surfaces du corps (3) sont au moins partiellement étanchéifiés après l'usinage de la protubérance de matériau.

19. Procédé selon la revendication 18, **caractérisé en ce que** les pores sont étanchéifiés par imprégnation avec un plastique.
